# EUROPÄISCHE PATENTSCHRIFT

(11) **EP 1 458 600 B1**
(45) Veröffentlichungstag und Bekanntmachung des Hinweises auf die Patenterteilung: **08.11.2006**
(21) Anmeldenummer: 02792672.4
(22) Anmeldetag: 18.12.2002
(51) Int. Cl.: B60S 1/40

(54) **SCHEIBENWISCHER MIT EINEM WISCHARM**
WINDSCREEN WIPER WITH A WIPER ARM
ESSUIE-GLACE DOTE D'UN BRAS

(30) Priorität: 19.12.2001 DE 10162401
(43) Veröffentlichungstag der Anmeldung: 22.09.2004
(73) Patentinhaber: ROBERT BOSCH GMBH, 70442 Stuttgart (DE)
(72) Erfinder: OP'T ROODT, Inigo, B-3500 Hasselt (BE)
(86) Internationale Anmeldenummer: PCT/DE2002/004632
(87) Internationale Veröffentlichungsnummer: WO 2003/051695

(56) Entgegenhaltungen:
- EP-A- 0 053 960
- DE-A- 19 924 662
- GB-A- 1 599 534
- US-A- 4 649 591
- US-A- 5 435 041

## Beschreibung

### Stand der Technik

Die Erfindung geht von einem Scheibenwischer mit einem Wischarm nach dem Oberbegriff des Anspruchs 1 aus.

Bekannte Scheibenwischer weisen einen Wischarm auf, der auf einer Wischerwelle sitzt. Diese wird von einem Wischermotor angetrieben. Mit dem freien Ende des Wischarms ist ein Wischblatt gelenkig verbunden. Es besitzt in der Regel ein mehrgliederiges Tragbügelsystem mit einem Mittelbügel. An diesem sind untergeordnete Bügel angelenkt, von denen zumindest einige mit Krallen an ihren Enden eine Wischleiste halten. Es sind auch gelenklose Wischblätter bekannt, die anstelle des Tragbügelsystems ein senkrecht zur Fahrzeugscheibe federndes, elastisches Tragelement besitzen, das aus Kunststoff hergestellt ist. Um die Federeigenschaft zu verbessern, kann es mindestens eine Federschiene aus Federstahl aufweisen. Das Tragelement besitzt im unbelasteten Zustand eine stärkere Krümmung als die Fahrzeugscheibe, so dass sich die Wischleiste unter der Anpresskraft des Wischarms mit einer geeigneten Druckverteilung an die Fahrzeugscheibe anlegt.

Gelenklose Wischblätter bauen sehr niedrig, was bezüglich ihres strömungstechnischen Verhaltens und der Geräuschentwicklung im Fahrtwind sehr günstig ist. Aus der DE 199 24 662 A1 ist ein Scheibenwischer mit einem gelenklosen Wischblatt bekannt, das über ein so genanntes "Sidelock-System" an einem Wischarm angelenkt ist. Hierzu ist ein Stift an dem freien Ende des Wischarms, der ein zur Fahrzeugscheibe hin offenes, u-förmiges Profil aufweist, seitlich und quer zu dessen Längsrichtung und zu dem Wischblatt zeigend vernietet. Der Stift ist in einer Lagerbohrung eines Verbindungsteils schwenkbar gelagert, welches fest mit dem Tragelement des Wischblatts verbunden ist.

Parallel zum Stift ist am Wischarm in Längsrichtung versetzt eine Brücke angeordnet, die an ihrem freien Ende zur Seite des Stifts hin abgewinkelt ist. In einer Montageposition, in der das Wischblatt quer zur Längsrichtung des Wischarms gehalten wird, kann der Stift in die Lagerbohrung des Verbindungsteils geschoben werden. Wird das Wischblatt anschließend parallel zur Längsrichtung des Wischarms gedreht, übergreift die Brücke das Wischblatt und verriegelt es mit ihrem abgewinkelten Ende, so dass das Wischblatt im montierten Zustand auf dem Stift zwischen dem abgewinkelten Ende der Brücke und dem Wischarm geführt ist. Die Brücke taucht in der Betriebsstellung des Wischblatts in eine entsprechende Nut des Verbindungsteils ein und schließt etwa bündig mit der Oberseite des Verbindungsteils ab. Zur Demontage muss das Wischblatt in die entgegengesetzte Richtung geschwenkt werden, bis das abgewinkelte Ende außer Eingriff gebracht ist und das Wischblatt vom Stift gezogen werden kann.

Aus der US 4 980 944 A1 ist ein weiteres Sidelock-System mit einem zylindrischen Adapter bekannt, der zum Ausgleichen unterschiedlicher Stiftdurchmesser dient. Der Adapter besitzt eine Lagerbohrung, die exzentrisch zur äußeren Kontur des Adapters angeordnet ist. Die Exzentrizität ist dabei so gewählt, dass in einem Bereich des Umfangs des Adapters ein durchgehender Längsschlitz entsteht. Der Adapter wird zur Montage zusammengedrückt und in zwei Öffnungen eines u-förmigen Bügels eines Wischleistenträgers gefügt. Nach dem Einfädeln nimmt der Adapter seine ursprüngliche Form wieder ein und drückt mit seinem Umfang gegen die Öffnungen in den Schenkeln des U-Profils. Ein Federklipp, der an der Grundfläche des U-Profils angeordnet ist und in den Längsschlitz eingreift, sichert den Adapter gegen Verdrehen. Ferner hält er ihn in axialer Richtung, indem er sich an seitlichen Schultern des Adapters abstützt. In einem nächsten Montageschritt kann der am freien Ende des Wischarms befestigte Stift in die Durchgangsbohrung gesteckt werden.

### Vorteile der Erfindung

Nach der Erfindung weist das Wischblatt ein Tragbügelsystem mit einem Mittelbügel auf, der einen Einhängekasten besitzt, dessen Seitenwände durch einen Gelenkbolzen miteinander verbunden sind und in Längsrichtung zum Gelenkbolzen versetzt jeweils mindestens einen Durchzug aufweisen. Solche an sich üblichen Wischblätter werden mit Wischarmen verwendet, die mit ihrem hakenförmigen Ende von oben in den Einhängekasten eingreifen und unter Verwendung eines Adapters den Gelenkbolzen umfassen oder mit zwei Rastzapfen in zwei einander gegenüber liegende Durchzüge eingreifen.

Nach der Erfindung ist ein nach unten offener, im Querschnitt im Wesentlichen u-förmiger Adapter aus Kunststoff von oben in den Einhängekasten eines Wischblatts eingesetzt, dessen Deckwand mit Kragen seitlich über die Seitenwände des Einhängekastens übersteht und im Bereich der Brücke seitliche Führungsflächen bildet. An diesen liegen eine Anlagefläche des Wischarms und das abgewinkelte Ende der Brücke im montierten Zustand an und führen das Wischblatt in axialer Richtung des Stifts. Ferner sind in einander gegenüber liegenden Seitenwänden des Adapters durch Schlitze Federzungen gebildet, an denen rohrförmige Lagerstutzen angeformt sind. Diese rasten in Durchzüge ein und dienen zum schwenkbaren Lagern des Wischblatts auf dem Stift. Der Adapter stützt sich mit seinen Kragen an den Seitenwänden des Einhängekastens ab, so dass er sich nicht in den Durchzügen drehen kann. Hierbei greifen die Seitenwände zweckmäßigerweise jeweils in eine Nut, die in dem Kragen vorgesehen ist. Zusätzlich kann der Adapter durch einen Klipp gehalten werden, der an der Innenseite vorzugsweise fest mit der Deckwand verbunden ist und im montierten Zustand mit Rastnasen den Gelenkbolzen umfasst. Dadurch ergibt sich eine sehr stabile Anbindung des Adapters an das Wischblatt, wodurch eine gute Führung des Wischblatts gewährleistet ist.

Durch den erfindungsgemäßen Adapter kann ein Wischarm, dessen freies Ende mit einem Querstift für ein Sidelock-System versehen ist, auch für ein Wischblatt mit einem Tragbügelsystem verwendet werden. Bezüglich der Windgeräusche und Strömungswiderstände lassen sich die Vorteile, die mit der flachen, niedrigen Bauweise des Sidelock-Systems verbunden sind, mit einfachen Mittel auch bei Wischblättern mit einem Tragbügelsystem erzielen. Ferner werden die Teile des Wischarms und des Wischblatts, die in der Regel aus Metall, nämlich Blech, gefertigt sind, durch den Adapter aus Kunststoff gegeneinander isoliert, so dass die Bewegungsgeräusche und der Verschleiß minimiert werden. Dabei bleiben vorteilhafterweise die Form und die Abmessung des Wischarms und des Wischblatts erhalten, so dass keine konstruktiven Veränderungen bzw. neue Werkzeuge zum Fertigen der Bauteile notwendig sind.

Der Adapter wird von oben in den Einhängekasten eingesetzt, wobei die Seitenwände des Adapters an den Innenseiten des Einhängekasten anliegen. Um definiert Kontaktflächen im Bereich der Enden zu erhalten, sind an den Außenseiten der Seitenwände Führungsrippen angeordnet. Diese werden durch ein kastenförmiges Hohlprofil abgestützt, das durch die Stirnwände, Teile der Seitenwände und parallel zu den Stirnwänden verlaufende Zwischenwände gebildet wird und eine steife Abstützung ergibt. Die Teile der Seitenwände, die die elastisch nachgiebigen Federzungen mit den Lagerstutzen umfassen, sind durch Einschnitte bzw. Aussparungen von den Hohlprofilen getrennt, so dass die Lagerstutzen leicht in die Durchzüge einrasten können.

Zweckmäßigerweise ist der Adapter aus einem Kunststoff hergestellt, wobei vorteilhafterweise während des Spritzvorgangs alle Formelemente mit der erforderlichen Genauigkeit ausgeformt werden. Zudem besitzt Kunststoff in der Regel gute Gleiteigenschaften, welche beim erfindungsgemäßen Adapter in den rohrförmigen Lagerstutzen wichtig sind, da hier der Stift des Wischarms drehbar gelagert ist. Ferner wird durch einen zwischen geschalteten, aus Kunststoff hergestellten Adapter ein unerwünschter Kontakt zwischen den metallischen Oberflächen des Wischarms und des Wischblatts vermieden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine Explosionsdarstellung einer Gelenkverbindung zwischen einem Wischarm und einem Wischblatt,

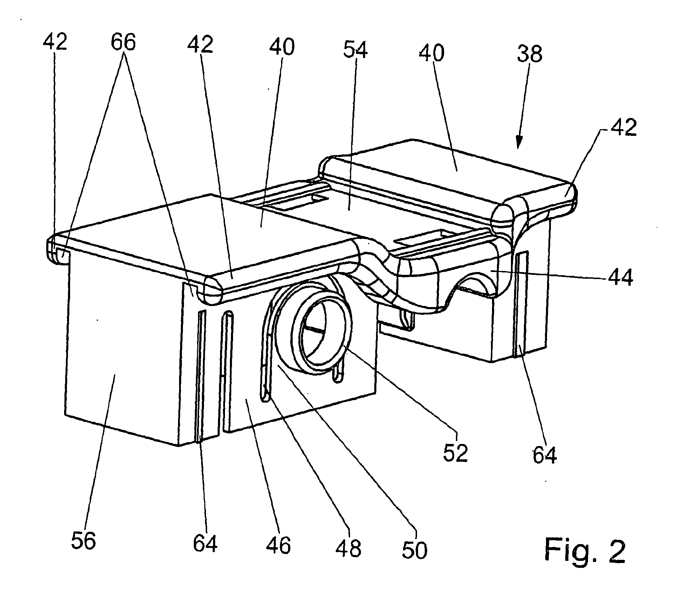

Fig. 2 eine perspektivische Ansicht eines Adapters von oben und
Fig. 3 eine perspektivische Ansicht des Adapters von unten.

### Beschreibung des Ausführungsbeispiels

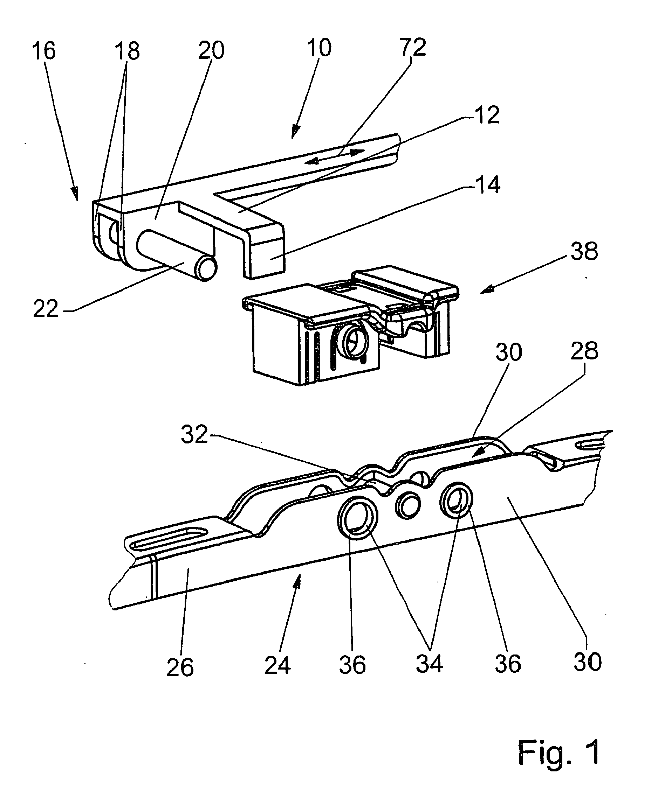

Von einem Scheibenwischer sind nur die Teile eines Wischarms 10 und eines Wischblatts 24 (Fig. 1) dargestellt, so weit es für das Verständnis der Erfindung notwendig ist. Der Wischarm 10 besitzt ein u-förmiges Profil 16, an dessen Schenkeln 18 seitlich, quer zur Längsrichtung 72 und zum Wischblatt 24 zeigend ein Stift 22 befestigt ist, so dass das Wischblatt 24 nach dem Sidelock-System montiert werden kann und eine niedrige Bauhöhe des Scheibenwischers erreicht wird. Ferner ist am freien Ende des Wischarms 10 eine Brücke 12 angeformt, welche parallel zum Stift 22 und in Längsrichtung 72 relativ zu diesem versetzt angeordnet ist und ein abgewinkeltes Ende 14 aufweist. Das Wischblatt 24 besitzt ein Tragbügelsystem, von dem ein Mittelbügel 26 dargestellt ist, der einen Einhängekasten 28 besitzt, dessen Seitenwände 30 durch einen Gelenkbolzen 32 miteinander verbunden sind. Außerdem sind zu beiden Seiten des Gelenkbolzens 32 in Längsrichtung 72 versetzt in den Seitenwänden 30 jeweils zwei einander gegenüber liegende Durchzüge 34 angeordnet.

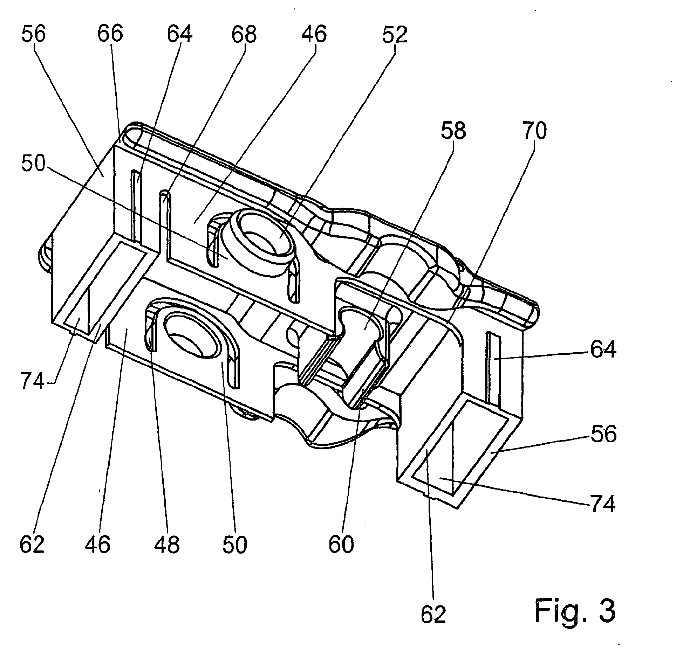

Das Wischblatt 24 wird mit Hilfe eines Adapters 38 mit dem Wischarm 10 verbunden. Der Adapter 38 besitzt einen im Wesentlichen u-förmigen Querschnitt mit einer Deckwand 40 und Seitenwänden 46. Während er nach unten offen ist, sind die Enden durch Stirnwände 56 geschlossen. Diese sind so dimensioniert, dass sich im montierten Zustand die Seitenwände 46 des Adapters 38 an den Seitenwänden 30 des Einhängekastens 28 abstützen. Um eine stabile Abstützung zu erreichen, sind in einem Abstand zu den Stirnwänden 56 Zwischenwände 62 vorgesehen (Fig. 3), die zusammen mit den Stirnwänden 56 und Teilen der Seitenwände 46 ein formsteifes Hohlprofil 74 bilden. Um den Adapter 38 leichter in den Einhängekasten 28 einpassen zu können, sind an den Außenseiten der Seitenwände 46 im Bereich der Hohlprofile 74 parallel zu den Stirnwänden 56 verlaufende Führungsrippen 64 vorgesehen.

Schlitze 68 oder Aussparungen 70, die nach unten hin offen sind, trennen den Bereich der Hohlprofile 74 von dem übrigen Bereich der Seitenwände 46. In diesem Bereich sind Federzungen 50 vorgesehen, die durch Schlitze 48 in Form eines Bogens in den Seitenwänden 46 gebildet werden. Die Federzungen 50 tragen nach außen weisende Lagerstutzen 52 für den Stift 22, die bei der Montage des Adapters 38 nach innen federnd ausweichen und dann in die Durchzüge 34 des Einhängekastens 28 einrasten können. Um die Kontaktflächen zwischen den Durchzügen 34 und den Lagerstutzen zu vergrößern, besitzen die Durchzüge 34 nach außen weisende Ränder 36. Hierdurch wird die Flächenpressung an den Lagerstutzen 52 reduziert.

Die Deckwand 40 steht seitlich so weit über die Seitenwände 46 vor, dass sie im montierten Zustand mit Kragen 42 die oberen Ränder der Seitenwände 30 des Einhängekastens 28 überdeckt, wobei die Seitenwände 30 in Nuten 66 der Kragen 42 eintauchen. Mit den Kragen 42 kann sich der Adapter 38 am Einhängekasten 28 abstützen, so dass er gegen Verdrehen um die Schwenkachse des Wischblatts 24 gesichert ist.

Die Deckwand 40 besitzt an ihrer Außenseite eine Senke 54, deren Tiefe auf die Materialstärke der Brücke 12 abgestimmt ist. Dadurch kann die Brücke 12 im montierten Zustand in die Senke 54 eingreifen und mit ihrer äußeren Oberfläche etwa bündig mit der äußeren Oberfläche der Deckwand 40 abschließen. Dies ergibt strömungstechnische und optische Vorteile. Die Kragen 42 sind im Verlauf der Senke 54 angepasst und besitzen in diesem Bereich an ihren Außenseiten Führungsflächen 44, die im montierten Zustand auf der einen Seite des Adapters 38 an einer Anlagefläche 20 des Wischarms 10 und auf der anderen an dem abgewinkelten Ende 14 der Brücke 12 anliegen. Von der Deckwand 40 nach innen weisend besitzt der Adapter 38 einen Klipp 58, der im montierten Zustand mit Rastnasen 60 den Gelenkbolzen 32 des Wischblatts 24 umfasst.

Zur Montage wird der Adapter 38 von oben in den Einhängekasten 28 eingesetzt, wobei die Lagerstutzen 52 in die Durchzüge 34 und der Klipp 58 auf dem Gelenkbolzen 32 einrasten. Dadurch entsteht eine stabile Verbindung zwischen dem Adapter 38 und dem Wischblatt 24, wodurch eine gute Führung des Wischblatts 24 gewährleistet ist. Das Wischblatt 24 wird nun mit dem montierten Adapter 38 um seine Drehachse so weit gedreht, dass das Wischblatt 24 etwa senkrecht zur Längsrichtung 72 des Wischarms 10 steht. In dieser Position lässt sich das Wischblatt 24 auf den Stift 22 des Wischarms 10 schieben. Anschließend wird er in die Ausgangslage zurückgedreht, in der das Wischblatt 24 etwa parallel zur Längsrichtung 72 des Wischarms 10 verläuft. In dieser Position greift die Brücke 12 über das Wischblatt 24 und taucht in die Senke 54 des Adapters 38, wobei die äußeren Oberflächen der Brücke 12 und des Adapters 38 etwa bündig abschließen. Gleichzeitig kommt das abgewinkelte Ende 14 der Brücke 12 an der zugeordneten Führungsfläche 44 des Adapters 38 zur Anlage und verriegelt somit die Gelenkverbindung in axialer Richtung.

## Patentansprüche

1. Scheibenwischer mit einem Wischarm (10), an dessen freiem Ende seitlich, quer zur Längsrichtung (72) und zu einem Wischblatt (24) zeigend ein Stift (22) zum gelenkigen Verbinden des Wischblatts (24) befestigt ist, der in einer Durchgangsöffnung des Wischblatts (24) steckt und in einer montierten Stellung durch eine Brücke (12) axial verriegelt ist, die parallel zum Stift (22) am Wischarm (10) angeordnet ist und mit einem abgewinkelten Ende (14) das Wischblatt (24) übergreift, **dadurch gekennzeichnet, dass** das Wischblatt (24) ein Tragbügelsystem mit einem Mittelbügel (26) aufweist, der einen Einhängekasten (28) besitzt, dessen Seitenwände (30) durch einen Gelenkbolzen (32) miteinander verbunden sind und in Längsrichtung (72) zum Gelenkbolzen (32) versetzt jeweils mindestens einen Durchzug (34) aufweisen, dass von oben in den Einhängekasten (28) ein nach unten offener, im Querschnitt im Wesentlichen u-förmiger Adapter (38) aus Kunststoff eingesetzt ist, dessen Deckwand (40) mit Kragen (42) seitlich über die Seitenwände (30) übersteht und im Bereich der Brücke (12) seitliche Führungsflächen (44) bildet, an denen eine Anlagefläche (20) und das abgewinkelte Ende (14) der Brücke (12) im montierten Zustand anliegen, und dass in einander gegenüber liegenden Seitenwänden (46) durch Schlitze (48) Federzungen (50) gebildet sind, an denen rohrförmige Lagerstutzen (52) angeformt sind, die in Durchzüge (34) einrasten und in denen der Stift (22) gelagert ist.

2. Scheibenwischer nach Anspruch 1, **dadurch gekennzeichnet, dass** die Deckwand (40) des Adapters (38) im Bereich der Brücke (12) eine quer verlaufende Senke (54) aufweist, deren Tiefe der Materialstärke der Brücke (12) angepasst ist.

3. Scheibenwischer nach einem der vorhergehenden Ansprüche, **dadurch gekennzeichnet, dass** an der Innenseite der Deckwand (40) ein Klipp (58) vorgesehen ist, der im montierten Zustand mit Rastnasen (60) den Gelenkbolzen (32) umfasst.

4. Scheibenwischer nach Anspruch 3, **dadurch gekennzeichnet, dass** der Klipp (58) fest mit der Deckwand (40) verbunden ist.

5. Scheibenwischer nach einem der vorhergehenden Ansprüche, **dadurch gekennzeichnet, dass** parallel zu Stirnwänden (56) des Adapters (38) Zwischenwände (62) angeordnet sind, die zusammen mit den Seitenwänden (46) ein kastenförmiges Hohlprofil (74) bilden, wobei an der Außenseite der Seitenwände (46) im Bereich der Hohlprofile (74) Führungsrippen (64) angeordnet sind.

6. Scheibenwischer nach Anspruch 5, **dadurch gekennzeichnet, dass** die Seitenwände (46) zwischen den Zwischenwänden (62) und den Federzungen (50) nach unten offene Schlitze (68) oder Aussparungen (70)aufweisen.

7. Scheibenwischer nach einem der vorhergehenden Ansprüche, **dadurch gekennzeichnet, dass** in den Kragen (42) der Deckwand (40) eine Nut (66) vorgesehen ist, in die im montierten Zustand die Seitenwände (30) des Einhängekasten (28) eingreifen.

## Claims

1. Windscreen wiper with a wiper arm (10), to the free end of which laterally and facing transversely to the longitudinal direction (72) and to a wiper blade (24), a pin (22) is attached for the articulated connection of the wiper blade (24), which pin is inserted in a through opening in the wiper blade (24) and is locked axially in an assembled position by means of a bridge (12), which is arranged parallel to the pin (22) on the wiper arm (10) and engages over the wiper blade (24) with an angled end (14), **characterized in that** the wiper blade (24) has a supporting yoke system with a central yoke (26), which possesses a carrier box (28), the side walls (30) of which are connected to one another by means of a hinge bolt (32) and, in each case offset in the longitudinal direction (72) in relation to the pivot shaft (32) has at least one eyelet (34), **in that** a downwardly open and in its cross section essentially U-shaped adapter (38) made of plastic is inserted from above into the carrier box (28), the corner wall (40) of which projects with collars (42) laterally above the side walls (30) and forms lateral guide surfaces (44) in the area of the bridge (12), with which lateral guide surfaces a contact surface (20) and the angled end (14) of the bridge (12) make contact in the installed state, and **in that** spring tongues (50) are formed by means of slots (48) in mutually opposite side walls (46), on which tubular bearing supports (52) are formed, which latch into eyelets (34) and in which the pin (22) is mounted.

2. Windscreen wiper according to Claim 1, **characterized in that**, in the area of the bridge (12), the corner wall (40) of the adapter (38) has a transversely running recess (54), the depth of which is matched to the material thickness of the bridge (12).

3. Windscreen wiper according to one of the preceding claims, **characterized in that** a clip (58) is provided on the inside of the corner wall (40), and surrounds the hinge bolt (32) with matching tabs (60) in the installed state.

4. Windscreen wiper according to Claim 3, **characterized in that** the clip (58) is firmly connected to the corner wall (40).

5. Windscreen wiper according to one of the preceding claims, **characterized in that** intermediate walls (62) are arranged parallel to end walls (56) of the adapter (38), and, together with the side walls (46), form a box-shaped hollow profile (74), in conjunction with which guide ribs (64) are arranged on the outside of the side walls (46) in the area of the hollow profiles (74).

6. Windscreen wiper according to Claim 5, **characterized in that**, between the intermediate walls (62) and the flexible tongues (50), the side walls (46) have slots (68) or grooves (70) that are open in a downward direction.

7. Windscreen wiper according to one of the preceding claims, **characterized in that** a groove (66) is provided in the collars (42) of the corner wall (40), in which groove the side walls (30) of the carrier box (28) engage in the installed state.

## Revendications

1. Essuie-glace comprenant un bras d'essuie-glace (10) avec un balai d'essuie-glace (24) et fixé à l'extrémité libre du bras, latéralement à celui-ci, par une liaison articulée à l'aide d'une broche (22) dirigée transversalement à la direction longitudinale (72) vers le balai d'essuie-glace (24), cette broche venant dans un orifice traversant du balai d'essuie-glace (24) et en position installée, la broche est verrouillée axialement par une pièce en forme de cavalier (12) installée parallèlement à la broche (22) sur le bras d'essuie-glace (10) et chevauchant le balai d'essuie-glace (24) par une extrémité repliée (14),
**caractérisé en ce que**
le balai d'essuie-glace (24) comporte un système de palonnier ayant un palonnier central (26) muni d'un caisson d'accrochage (28) dont les parois latérales (30) sont reliées par un goujon d'articulation (32) et présentent chaque fois au moins un passage (34) décalé dans la direction longitudinale (72) par rapport au goujon d'articulation (32),
un adaptateur (38) en matière plastique, à section pratiquement en forme de U, ouvert dans sa partie inférieure, étant logé par le dessus dans le caisson d'accrochage (28), la paroi de couverture (40) de cet adaptateur débordant par des bords (42) les parois latérales (30) et formant au niveau de la pièce en forme de pont (12) des surfaces de guidage latérales (44) contre lesquelles s'appuie à l'état installé, une surface d'appui (20) et l'extrémité repliée (14) de la pièce en forme de pont (12), et
des languettes élastiques (50) sont formées par des fentes (48) dans les parois latérales (46) en regard, languettes munies d'appuis de palier (52) en forme de tubes qui s'accrochent dans les passages (34) et reçoivent la broche (22).

2. Essuie-glace selon la revendication 1,
**caractérisé en ce que**
la paroi de couverture (40) de l'adaptateur (38) comporte au niveau de la pièce en forme de pont (12) un creux transversal (54) dont la profondeur correspond à l'épaisseur de la matière de la pièce en forme de pont (12).

3. Essuie-glace selon l'une des revendications précédentes,
**caractérisé en ce qu'**
une pièce d'enclipsage (58) est prévue sur le côté intérieur de la paroi de couverture (40), pièce qui à l'état monté entoure le goujon d'articulation (32) par des becs d'enclipsage (60).

4. Essuie-glace selon la revendication 3,
**caractérisé en ce que**
la pièce d'enclipsage (58) est solidaire de la paroi de couverture (40).

5. Essuie-glace selon l'une des revendications précédentes,
**caractérisé par**
des cloisons (62) parallèles aux parois frontales (56) de l'adaptateur (38), ces cloisons formant avec les parois latérales (46) un profilé creux (74) en forme de caisson,
des nervures de guidage (64) étant prévues sur les faces extérieurs des parois latérales (46) au niveau du profilé creux (74).

6. Essuie-glace selon la revendication 5,
**caractérisé en ce que**
les parois latérales (46) entre les cloisons (62) et les languettes élastiques (50) ont des fentes (68) ouvertes vers le bas ou des dégagements (70).

7. Essuie-glace selon l'une des revendications précédentes,
**caractérisé par**
une rainure (66) dans la collerette (42) de la paroi de couverture (40), et qui à l'état monté reçoit les parois latérales (30) du caisson d'accrochage (28).
